# EUROPÄISCHE PATENTSCHRIFT

(11) **EP 2 963 140 B1**
(45) Veröffentlichungstag und Bekanntmachung des Hinweises auf die Patenterteilung: **12.06.2019**
(21) Anmeldenummer: 15163147.0
(22) Anmeldetag: 10.04.2015
(51) Int. Cl.: C22F 1/047

(54) **VERFAHREN ZUR HERSTELLUNG EINES KRAFTFAHRZEUGBAUTEILS AUS ALUMINIUM**
METHOD FOR MANUFACTURING A MOTOR VEHICLE PART MADE OF ALUMINIUM
PROCÉDÉ DE FABRICATION D'UN ÉLÉMENT DE VÉHICULE AUTOMOBILE EN ALUMINIUM

(30) Priorität: 10.06.2014 DE 102014108114
(43) Veröffentlichungstag der Anmeldung: 06.01.2016
(73) Patentinhaber: Benteler Automobiltechnik GmbH, 33102 Paderborn (DE)
(72) Erfinder: Bohner, Friedrich, 33813 Oerlinghausen (DE); Dörr, Jochen, 33104 Bad Driburg (DE); Grewe, Jochem, 33154 Salzkotten (DE); Hielscher, Christian, 33129 Delbrück (DE); Rauscher, Boris, 33100 Paderborn (DE); Tölle, Jörn, 33102 Paderborn (DE)
(74) Vertreter: Osterhoff, Utz

(56) Entgegenhaltungen:
- EP-A1- 2 415 882
- EP-A1- 2 415 895
- JP-A- 2009 148 823
- US-A1- 2010 218 860
- US-B1- 6 550 302
- US-B2- 8 211 251
- US-B2- 8 486 206
- NIA R. HARRISON ET AL: "Optimization of High-Volume Warm Forming for Lightweight Sheet", SAE TECHNICAL PAPER SERIES, Nr. 2013-01-1170, 8. April 2013 (2013-04-08), Seiten 1-11, XP055215184, US ISSN: 0148-7191, DOI: 10.4271/2013-01-1170
- BILLUR E. AND ALTAN T.: "R&D Update: Warm forming of alloys in the auto industry. An alternative to struggling with straight stamping of aluminum alloys has emerged.", STAMPING JOURNAL , 28. Juni 2013 (2013-06-28), Seite 7pp, XP002744952, Gefunden im Internet: URL:http://www.thefabricator.com/article/s tamping/warm-forming-of-alloys-in-the-auto -industry [gefunden am 2015-11-13]

## Beschreibung

Die vorliegende Erfindung betrifft ein Verfahren zur Herstellung eines Kraftfahrzeugbauteils gemäß den Merkmalen im Oberbegriff von Patentanspruch 1.

Aus dem Stand der Technik ist es bekannt, Fahrzeugbauteile sowie Kraftfahrzeugstrukturbauteile aus metallischen Werkstoffen herzustellen. Hierbei wird einer selbsttragenden Kraftfahrzeugkarosserie die notwendige Steifigkeit für den regulären Fahrzeugbetrieb gegeben. In den letzten Jahren sind die Anforderungen an solche Kraftfahrzeugkarosserien jedoch stark gestiegen. Es stand nicht mehr nur die reine Formgebung im Vordergrund, sondern gleichzeitig auch die gezielte Einstellung von Eigenschaften im Falle eines Fahrzeugcrashes sowie konsequenter Leichtbau. Hierzu ist es aus dem Stand der Technik bekannt, Stahlwerkstoffe einzusetzen, mit denen es möglich ist, Bauteile mit hochfesten oder gar höchstfesten Eigenschaften bereitzustellen. Diese hochfesten oder höchstfesten Eigenschaften werden gezielt partiell an den Bauteilen hergestellt.

Alternativ ist es bekannt, Kraftfahrzeugbauteile aus Aluminium herzustellen. Aluminium kommt hierbei als Leichtmetallbauteil zum Einsatz und ermöglicht durch sein geringes spezifisches Eigengewicht eine entsprechende Gewichtsersparnis. Die Herstellung des Aluminiumbauteils für Kraftfahrzeuge ist beispielsweise aus der DE 10 2009 008 282 A1 bekannt.

Weiterhin ist aus der Optimization of High-Volume Warm Forming for Lightweight Sheet eine partielle Temperierung für eine Aluminiumblechplatine bekannt, um daraus einen Türrahmen für eine Kraftfahrzeugtür herzustellen.

Ferner ist aus der US2010/02188601 ein Verfahren zum Warmumformen von Aluminiumplatinen bekannt.

Ferner ist aus der EP 2 415 882 A1 ein Verfahren zur Herstellung von Bauteilen aus einer Leichtmetalllegierung bekannt. Hierbei wird eine kaltverfestigte Platine zumindest partiell in besonders kurzer Zeit erwärmt und anschließend umgeformt. Ein ähnliches Verfahren ist aus der US 8,486,206 B2 bekannt.

Ferner ist aus der EP 2 415 895 A1 ein warmformtechnisches hergestelltes Kraftfahrzeugblechformteil bekannt, welches aus einer nicht aushärtbaren Aluminiumlegierung besteht.

Aufgabe der vorliegenden Erfindung ist es, ausgehend vom Stand der Technik ein Verfahren zur Herstellung eines Kraftfahrzeugbauteils aus einer Leichtmetalllegierung aufzuzeigen, mit dem es verfahrensökonomisch und kostengünstig möglich ist, ein Kraftfahrzeugbauteil mit voneinander verschiedenen Festigkeitsbereichen zu produzieren.

Die zuvor genannte Aufgabe wird mit einem Verfahren gemäß den Merkmalen im Patentanspruch 1 gelöst.

Vorteilhafte Ausführungsvarianten des Verfahrens werden in den abhängigen Patentansprüchen dargestellt.

Das erfindungsgemäße Verfahren zur Herstellung eines Kraftfahrzeugbauteils, insbesondere einer Fahrzeugsäule ist gekennzeichnet durch folgende Verfahrensschritte:
- Bereitstellen einer kaltverfestigten Platine aus einer 5000er Aluminiumlegierung,
- Partielles Erwärmen der Platine in mindestens einem ersten Bereich auf eine Temperatur größer 350°C, insbesondere auf 400°C wobei die Platine in mindestens einem zweiten Bereich auf einer Temperatur zwischen 15°C und 30°C, bevorzugt auf 20°C gehalten wird und das partielle Erwärmen in weniger als 20 s, bevorzugt weniger als 10s und insbesondere in 2 bis 5 s durchgeführt wird,
- Temperieren der gesamten Platine auf eine Temperatur zwischen 150 und 350°C, insbesondere 300°C in weniger als 20 s, bevorzugt weniger als 10 s und insbesondere in 2 bis 5 s, wobei das Temperieren in einem separaten Temperierwerkzeug durchgeführt wird wobei sich an das Temperierwerkzeug ein kombiniertes Umform-und Abkühlwerkzeug oder ein Umformwerkzeug und von diesem separates Abkühlwerkzeug anschließt,
- Umformen der Platine zu dem Kraftfahrzeugbauteil in weniger als 20 s, bevorzugt weniger als 10 s und insbesondere in 2 bis 5 s und Abkühlen des Kraftfahrzeugbauteils,
- wobei mit dem Verfahren eine Dehngrenze in dem ersten Bereich kleiner 250 MPa und größer 120 MPa und in dem zweiten Bereich kleiner gleich 450 MPa und größer 200MPa eingestellt wird, wobei die Dehngrenze des zweiten Bereichs kleiner als die Ausgangsdehngrenze der Platine und zugleich zumindest mehr als 50 MPa, bevorzugt mehr als 100 MPa größer als die Dehngrenze des ersten Bereichs ist.

Zunächst wird eine naturharte und/oder kaltverfestigte Platine aus einer 5000er Aluminiumlegierung bereitgestellt, welche Versetzungen im Kristallgitter und dadurch eine Dehngrenze zwischen 400 MPa und 500 MPa aufweist, welche auch als Ausgangsdehngrenze bezeichnet ist. Die Platine wird partiell in mindestens einem ersten Bereich erwärmt. Ein mindestens zweiter Bereich bleibt dann auf der Ausgangstemperatur, welche bevorzugt Raumtemperatur, insbesondere zwischen 10°C und 30°C darstellt. Gegebenenfalls in dem oder den zweiten Bereichen auftretende Erwärmungen bzw. Miterwärmungen im Bereich von wenigen Grad Celsius, beispielsweise im Randbereich eine Erwärmung auf bis zu 40°C oder 50°C sind dabei im Rahmen der Erfindung zu vernachlässigen. Durch das partielle Erwärmen in dem ersten Bereich folgt eine Entfestigung des Werkstoffgefüges, wobei die Temperatur und/oder die Zeit der Erwärmung in Abhängigkeit der zu erzielenden Festigkeit und Duktilität gewählt wird. Es handelt sich bei der Dehngrenze um die Dehngrenze RP 0,2.

Nach dem partiellen Erwärmen der Platine in einem ersten Bereich wird die gesamte Platine homogen auf eine Temperatur zwischen 150°C und 350°C, bevorzugt auf 300°C temperiert. Die so temperierte Platine weist dann sehr gute Umformeigenschaften sowie durch das vorangestellte partielle Erwärmen voneinander verschiedene Festigkeitseigenschaften auf. Die homogen auf die vorgenannte Temperatur temperierte Platine wird dann umformtechnisch zu dem Kraftfahrzeugbauteil weiter verarbeitet und im Anschluss daran abgekühlt.

Das Temperieren wird in einem separatem Temperierwerkzeug durchgeführt, wobei sich dann an das Temperierwerkzeug wiederum ein kombiniertes Umform- und Abkühlwerkzeug oder aber ein Umformwerkzeug und von diesem separaten Abkühlwerkzeug anschließen kann.

Insbesondere wird das Erwärmen und/oder Temperieren mit einem flächigen Temperierwerkzeug bevorzugt durch Anlagenkontakt durchgeführt, was eine Reduzierung des Herstellungsaufwands der Fertigungslinie sowie eine erhöhte Präzision der Einstellung der Temperatur erlaubt.

Das Umformen wird weiterhin besonders bevorzugt in einem Pressenumformwerkzeug durchgeführt und das Abkühlen im Falle des kombinierten Umform- und Pressenwerkzeuges in einem kühlbaren Umformwerkzeug durchgeführt. Das Abkühlen kann alternativ auch in einem separaten Kühlwerkzeug durch Kontakt erfolgen. Es ist ebenfalls möglich, dass die Abkühlung in einem Tauchbecken erfolgt, so dass das gesamte Kraftfahrzeugbauteil eingetaucht wird. Das Abkühlen kann dabei auch in einem ersten und zweiten Kühlvorgang durchgeführt werden, wobei in dem ersten Kühlvorgang auf eine Temperatur zwischen 120 und 200°C abgekühlt wird. In dem zweiten Kühlvorgang wird dann bevorzugt auf Raumtemperatur abgekühlt, wobei der zweite Kühlvorgang in weniger als 20 s, insbesondere weniger als 10 s und ganz besonders bevorzugt in weniger als 2,2 s bis 5 s durchgeführt wird, genauso wie der erste Kühlvorgang. Der erste und zweite Kühlvorgang können in einem Kühlwerkzeug durchgeführt werden, jedoch insbesondere in zwei voneinander separaten Kühlwerkzeugen. Der erste und zweite Kühlvorgang können dabei zeitlich unmittelbar aufeinander folgend durchgeführt werden, es kann jedoch auch zumindest eine Transferzeit von einem Kühlwerkzeug in ein zweites Kühlwerkzeug und/oder eine vorbestimmte Wartezeit zwischen erstem und zweitem Kühlvorgang eingelegt werden.

Besonders bevorzugt wird jeder einzelne der zuvor genannten Verfahrensschritte in einer Zeit von weniger als 20 s, bevorzugt weniger als 10 s, insbesondere in 2 s bis 5 s durchgeführt. Eventuelle Zwischentransfers werden weiterhin besonders bevorzugt ebenfalls in weniger als 10 s, ganz besonders bevorzugt in weniger als 5 s durchgeführt.

Im Rahmen der Erfindung wird bevorzugt eine Aluminiumlegierung mit der Bezeichnung AW/AA5xxx-Hxx verwendet. Es handelt sich dabei bevorzugt um eine kaltverfestigte Aluminiumlegierung, welche insbesondere durch einen vorgeschalteten Walzprozess entsprechend kaltverfestigt ist und optional in Zwischenschritten oder im Nachgang thermisch nachbehandelt worden sein kann. Dabei handelt es sich insbesondere um ein dem erfindungsgemäßen Erwärmen vorgeschaltetes Kaltwalzen. Durch das Kaltwalzen werden Versetzungen im Kristallgitter ausgebildet, so dass die kaltverfestigte Aluminiumlegierung eine Ausgangsdehngrenze zwischen 200 MPa und 450 MPa bevorzugt bis 500 MPa aufweist, insbesondere 300 MPa bis 450 MPa. Der Festigkeitszustand ist an dem verfestigten Ausgangsmaterial oder aber auch an einem hieraus hergestellten Kraftfahrzeugbauteil durch einen Zugversuch nachweisbar. Insbesondere wird eine Aluminiumlegierung gemäß der europäischen Norm EN515:1993 im Werkstoffzustand H12, H14, H16, H18, H19, H22, H24, H26, H28, H32, H34, H36 oder H38 verarbeitet, welche als Legierungselemente neben Aluminium zumindest Magnesium und gegebenenfalls Mangan sowie weitere Legierungselemente aufweist.

Insbesondere werden mit allen Verfahrensvarianten in einem ersten Bereich Festigkeiten zwischen 250 MPa und 120 MPa eingestellt und in dem zweiten Bereich Festigkeiten zwischen 450 MPa und 200 MPa eingestellt. Mithin wird ein eher harter Bereich sowie ein diesem gegenüber weicheren bzw. duktilerer Bereich an der Platine und dann mittelbar an dem nachgelagert hergestellten Kraftfahrzeugbauteil oder bei direkter Herstellung des Kraftfahrzeugbauteils an diesem direkt eingestellt.

Weiterhin besonders bevorzugt wird die Platine vor, während oder nach der Umformung endbeschnitten. Hiermit ist es dann möglich die äußere Bauteilkontur festzulegen.

In einer besonders bevorzugten Ausführungsvariante wird eine Platine mit mindestens zwei voneinander verschiedenen Wandstärken umgeformt. Insbesondere kommt hier ein Tailored Material zum Einsatz, wobei die verschiedenen Wandstärken insbesondere durch ein partielles Abwalzen während des Kaltwalzens hergestellt sind. Dies ist als Tailor Rolled Blank bekannt. Im Rahmen der Erfindung ist es jedoch auch möglich, ein Tailor Welded Blank zu verwenden, mithin eine Platine bei der zwei Blechplatinenteile mit unterschiedlicher Wandstärke thermisch gefügt sind. Hierzu eignet sich insbesondere das Reibrührschweißen, aber auch andere stoffschlüssige Kopplungsverfahren können zum Einsatz kommen. Im Rahmen der Erfindung ist es jedoch auch möglich, eine gepatchte Platine zu verwenden, so dass ein lokales Bauteilpatch auf die Platine aufgebracht wird. Die Platine wird dann zusammen mit dem Bauteilpatch umgeformt. Das Bauteilpatch wird dabei insbesondere mit der Platine verklebt sowie durch mechanische oder thermische Verfahren, wie z.B. Clinchen, Nieten, Reibrührschweißen, Punktschweißen in Position fixiert, wobei der Kleber thermisch aktivierbar ist und bei Erwärmen der Platine auf Umformtemperatur entsprechend mit der Platine zusammen verklebt wird.

Bezüglich der Einstellung der Dehngrenze im fertigen Kraftfahrzeugbauteil beziehen sich die Werte jeweils auf die Grundplatine, das heißt, auf die größere der Platinen, auf die wenigstens eine Patchplatine aufgebracht wurde.

Als Werkstoff für die Patchplatine kann dieselbe Aluminiumlegierung wie für die Grundplatine Verwendung finden. In diesem Fall ist der Ausgangslieferzustand oder die Wärmebehandlung der Patchplatine so zu wählen, dass während der Umformung zumindest das Formänderungsvermögen des korrespondierenden Bereiches der Grundplatine erreicht wird. Das gleiche gilt aber auch bei Einsatz eines anderen Patchwerkstoffes.

Besonders bevorzugt wird bei dem Tailored Material eine Platine mit Dickenvariationen zwischen 1 mm und 10 mm, insbesondere von 2 mm bis 6 mm Wandstärke umgeformt. Die Platine kann dann zumindest partiell dickere Wandstärken aufweisen, wobei die dickeren Wandstärken zwischen 1 mm und 15 mm, insbesondere zwischen 3 mm und 12 mm und ganz besonders bevorzugt zwischen 3,5 mm und 10 mm aufweisen und insbesondere bis zu 3 mm dicker sind als die übrigen Bereiche der Platine.

Insbesondere wird mit dem erfindungsgemäßen Verfahren ein Kraftfahrzeugbauteil aus einer Aluminiumlegierung hergestellt, welches im Fall einer Kollision lokal eine, in dessen Auslegung vorausdefinierte, Deformation erfahren soll, wobei das Kraftfahrzeugbauteil weiterhin mit weiteren Verstärkungsteilen gefügt werden kann. Auch die Verstärkungsteile können nach dem erfindungsgemäßen Verfahren hergestellt werden. Die Verstärkungsteile selbst werden nach Abschluss des Umformverfahrens mit dem Kraftfahrzeugbauteil gefügt. Insbesondere handelt es sich dabei um eine Innenverstärkung und/oder eine Außenverstärkung. Die Innenverstärkung kann beispielsweise in Form eines Patches auf das hergestellte Kraftfahrzeugbauteil aufgebracht werden. Im Rahmen der Erfindung ist es jedoch auch möglich, durch die Koppelung mit der Innenverstärkung und/oder der Außenverstärkung ein entsprechendes Hohlbauteil herzustellen. Bei den Verstärkungen handelt es sich insbesondere auch um Aluminiumbauteile. Die Verstärkung kann jedoch auch als Stahlbauteil ausgebildet sein oder aus Faserverbundwerkstoff aufgebracht sein. Besonders bevorzugt wird die Verstärkung mit dem Kraftfahrzeugbauteil verklebt. Das Kleben wird insbesondere mit einem thermischen oder mechanischen Fügeverfahren kombiniert, um die Verstärkung beim Aushärten in Position zu halten. Im Rahmen der Erfindung ist es jedoch auch möglich, dass die beiden Bauteile miteinander thermisch gefügt werden. Auch sind formschlüssige Koppelungsverfahren wie Nieten, insbesondere Stanznieten oder aber ein Clinchvorgang möglich.

Das Kühlwerkzeug kann dabei im Rahmen der Erfindung ein plattes Kühlwerkzeug sein, das durch Anlagenkontakt eine Kühlung herbeiführt. Im Rahmen der Erfindung ist es jedoch auch möglich, dass das Kühlwerkzeug beispielsweise als Tauchbad ausgebildet ist, so dass die gesamte temperierte Platine und/oder das temperiert hergestellt und umgeformte Kraftfahrzeugbauteil in das Tauchbad eingetaucht werden und hierbei abgekühlt wird. Besonders bevorzugt jedoch wird ein kombiniertes Kühl- und Umformwerkzeug eingesetzt, um die höchstmögliche Bauteilpräzision und Wirtschaftlichkeit zu erreichen.

Im Rahmen der Erfindung werden jedoch bei allen Ausführungsvarianten grundsätzlich immer die gesamte Platine und/oder das gesamte Kraftfahrzeugbauteil vollständig abgekühlt.

Im Rahmen der Erfindung werden die Platine oder das Bauteil weiterhin besonders bevorzugt oberflächenbehandelt. Hierunter ist insbesondere eine Beschichtung, ganz besonders bevorzugt eine Konversionsbeschichtung zu verstehen. Die Oberflächenbehandlung der Platine oder des Bauteils wirkt sich insbesondere vorteilhaft auf die Weiterverarbeitung mit Hinblick auf ein Fügen aus. Aufgrund der Oberflächenbehandlung besitzen die Platine oder das Bauteil, im Gegensatz zur sich unter Umgebungseinfluss selbsttätig bildenden inhomogenen und verunreinigten Oxidschicht, definierte, reproduzierbare Oberflächeneigenschaften. Dies wirkt sich insbesondere positiv auf alle nachfolgenden Fertigungsverfahren aus, welche eine Bindung mit dieser Oberfläche herstellen, wie z.B. Kleben, Lackieren oder zur Stabilisierung des Verfahrens möglichst reproduzierbare Eingangseigenschaften benötigen, wie z.B. Lichtbogenschweißen.

Im Rahmen der Erfindung wird zur Durchführung des Verfahrens insbesondere ein Werkzeug eingesetzt, das verschiedene Abschnitte aufweist, wobei die Abschnitte in dem Werkzeug voneinander verschiedene Temperaturen in Bezug auf ein Erwärmen oder aber Kühlen einnehmen können. Hierdurch sind dann die verschiedenen Temperaturgefälle an der Platine in den dort verschieden zu temperierenden Bereichen realisierbar. Die verschiedenen Abschnitte in dem Umform- bzw. Temperierwerkzeug können beispielsweise durch voneinander unabhängige Temperiersegmente, die insbesondere gegeneinander isoliert sind, ermöglicht werden. Das Kühlen kann dabei in dem Werkzeug zum partiellen Erwärmen durchgeführt werden oder alternativ in einem separaten Kühlwerkzeug.

Im Rahmen der Erfindung ist es weiterhin möglich, nach dem partiellen Erwärmen der Platine und vor dem Temperieren einen Zwischenschritt einzufügen. Der Zwischenschritt sieht vor, dass die partiell erwärmte Platine zunächst vollständig gekühlt wird, bevorzugt auf eine Temperierung zwischen 5° und 40° Celsius, bevorzugt auf Raumtemperatur. Diese vollständig gekühlte Platine kann dann wiederrum unmittelbar nach dem Kühlen temperiert, in diesem Fall erwärmt werden oder alternativ zwischengelagert werden. Das Zwischenlagern kann dabei über einen kurzen Zeitraum von beispielsweise wenigen Minuten bis zu wenigen Stunden erfolgen, kann jedoch auch mehrere Tage beinhalten, dadurch das der Gefügezustand der Platine bei Raumtemperatur sich nicht bzw. in zu vernachlässigender Weise ändert. Nach der Zwischenlagerung erfolgt dann wiederum ein Temperieren in Form eines Erwärmens.

Eine alternative bevorzugte Ausgestaltungsvariante der vorliegenden Erfindung sieht vor, dass die partiell erwärmte Platine zeitlich unmittelbar folgend auf den partiellen Erwärmungsvorgang temperiert wird und zur Temperierung dann entsprechend vollständig erwärmt und/oder in dem partiellen Bereich auf Temperiertemperatur gekühlt wird. Das Temperieren kann dabei in dem gleichen Werkzeug durchgeführt werden, das auch zur partiellen Erwärmung dient. Alternativ kann das Temperieren auch in einem von dem partiellen Erwärmungswerkzeug separaten Termperierwerkzeug durchgeführt werden.

Im Rahmen der Erfindung ergibt sich weiterhin optional ein besonderer Vorteil, so dass immer wenn der nachfolgende Prozessschritt zeitlich oder räumlich getrennt von dem unmittelbar vorausgehenden Prozessschritt der Platinenerwärmung durchgeführt werden kann, ist bevorzugt eine Abkühlung an Raumluft ohne Zeitbegrenzung vorgesehen. Für den Fall, dass es bei dieser Abkühlung zu einem Verzug der Platine oder einem unerwünschten Wärmefluss von den wärmeren in die kühleren Platinenbereiche kommt, ist auch eine schnelle Abkühlung in einer speziellen Kühlstation möglich.

Wenn der nachfolgende Prozessschritt zeitlich oder räumlich getrennt von dem unmittelbar vorausgehenden Prozessschritt der Erwärmung der Platine durchgeführt wird, dann ist es erfindungsgemäß möglich, die so hergestellten Platinen beispielsweise in einem Lager zu bevorraten und bei entsprechendem Bedarf abzurufen.

Anschließend erfolgt ein erneutes Erwärmen der bereits partiell thermisch vorbehandelten Platine zum Zwecke der Steigerung der Umformbarkeit der kompletten Platine, insbesondere auch des zweiten Bereiches, so dass die Platine anschließend in einem Umformwerkzeug zu dem gewünschten Kraftfahrzeugbauteil geformt werden kann.

Weitere Vorteile, Merkmale, Eigenschaften und Aspekte der vorliegenden Erfindung werden in der nachfolgenden Beschreibung erläutert sowie in den schematischen Figuren dargestellt. Diese dienen dem einfachen Verständnis der Erfindung. Es zeigen:
- Figur 1a und b: eine Seitenansicht sowie eine Querschnittsansicht einer erfindungsgemäß hergestellten Kraftfahrzeug B-Säule,
- Figur 2a und b: ein Außenverstärkungsblech für eine Kraftfahrzeug B-Säule gemäß Figur 1 und
- Figur 3a bis c: ein Innenverstärkungsblech.

In den Figuren werden für gleiche oder ähnliche Bauteile dieselben Bezugszeichen verwendet, auch wenn eine wiederholte Beschreibung aus Vereinfachungsgründen entfällt.

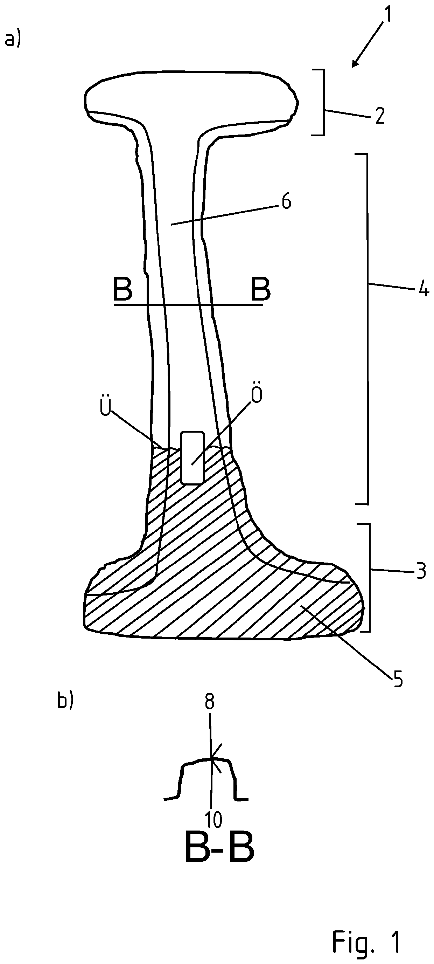

Figur 1a zeigt ein erfindungsgemäßes Kraftfahrzeugbauteil 1 in Form einer B-Säule in Seitenansicht. Die B-Säule weist einen Kopfbereich 2 zur Anbindung an einen nicht näher dargestellten Dachholm sowie einen Fußbereich 3 zur Anbindung an einen nicht näher dargestellten Seitenschweller auf. Zwischen dem Kopfbereich 2 und dem Fußbereich 3 erstreckt sich ein Mittelabschnitt 4 mit einer Öffnung Ö. Erfindungsgemäß ist nunmehr der Fußbereich 3 sowie ein unterer Teil des Mittelabschnittes 4 ausgebildet als erster Bereich 5, der während des Umformens auf der Umformtemperatur gehalten wird, so dass hier ein weicheres bzw. duktileres Gefüge mit bevorzugt zwischen 120 und 250 MPa eingestellt ist. Der obere Mittelabschnitt 4 sowie der Kopfbereich 2 sind hier als zweiter Bereich 6 ausgebildet, der gegenüber dem ersten Bereich 5 härtere Eigenschaften aufweist und eine Dehngrenze zwischen 250 MPa und 450 MPa besitzt. Getrennt sind erster Bereich 5 und zweiter Bereich 6 durch einen Übergang Ü, der sich über 1 mm bis 100 mm, vorzugsweise 15 mm bis 50 mm erstreckt. In Figur 1b ist ein Querschnitt gemäß der Schnittlinie B-B dargestellt, so dass zu erkennen ist, dass während des Umformverfahrens zumindest der Mittelabschnitt 4 in Form eines Hutprofils im Querschnitt ausgebildet wurde. Somit ist das Bauteil dreidimensional geformt worden.

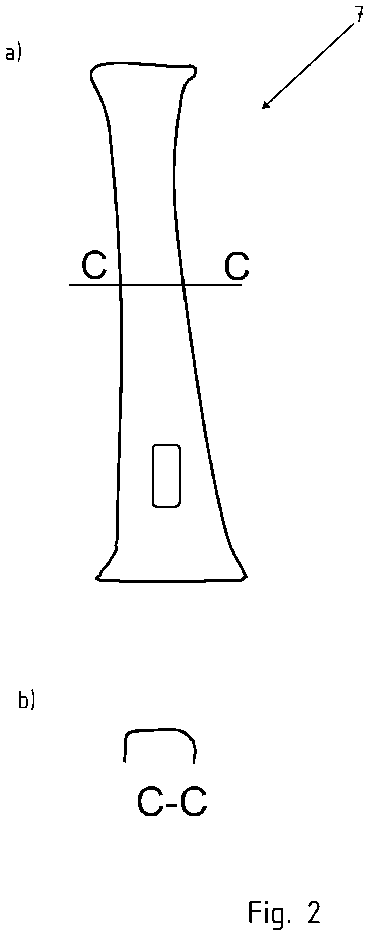

Ferner dargestellt sind in Figur 2a und b ein Außenverstärkungsblech 7 in Seitenansicht sowie in Querschnittsansicht. Das Außenverstärkungsblech 7 weist einen im Wesentlichen homogenen Querschnittsverlauf auf und ist gemäß Figur 2b als U-förmiges Verstärkungsblech ausgebildet. Dieses wird auf die Außenseite 8 gemäß Figur 1b des Kraftfahrzeugbauteils 1 aufgebracht, insbesondere durch Verkleben, besonders bevorzugt mit thermisch aktivierbarem Kleber.

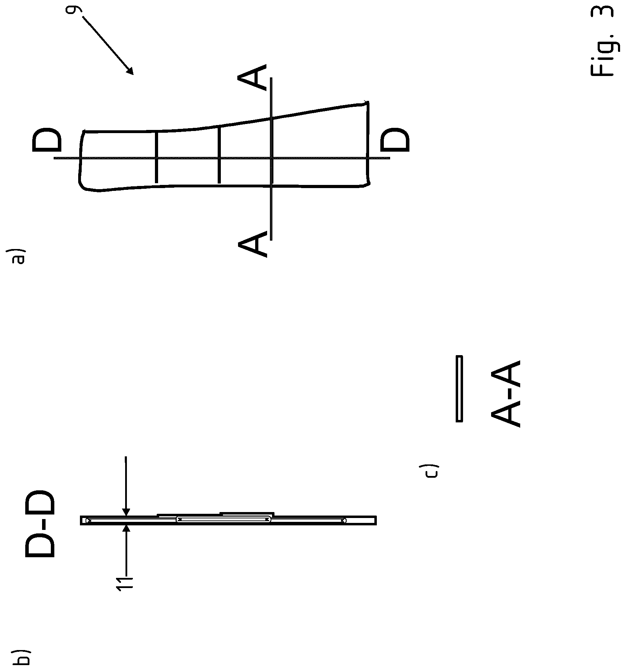

In Figur 3a bis c ist ferner ein Innenverstärkungsblech 9 dargestellt, dass in Figur 3a als Seitenansicht, Figur 3b als Längsschnitt und Figur 3c als Querschnitt dargestellt ist. Das Innenverstärkungsblech 9 wird auf einer Innenseite gemäß Figur 1b der B-Säule angebracht. Das Innenverstärkungsblech 9 weist gemäß Längsschnittlinie D-D partiell voneinander verschiedene Wandstärken 11 im Längsverlauf auf. Der Querschnittsverlauf ist dargestellt in Figur 3c gemäß Schnittlinie A-A, wobei dieser homogen und flach ausgebildet ist. Das Innenverstärkungsblech 9 wird an der Innenseite 10 gemäß Figur 1b aufgebracht, bevorzugt durch Verkleben.

Das Innenverstärkungsblech wird bevorzugt hergestellt aus einer zu einem Profil stranggepressten Aluminiumlegierung, wobei unterschiedliche Wandstärken im Profil eingestellt werden und in einem nachfolgenden Prozessschritt das Profil längs beschnitten, optional flach abgewickelt und/oder auf seine Endform pressgeformt wird.

### Bezugszeichen:

- 1 -: Kraftfahrzeugbauteil
- 2 -: Kopfbereich
- 3 -: Fußbereich
- 4 -: Mittelabschnitt
- 5 -: erster Bereich
- 6 -: zweiter Bereich
- 7 -: Außenverstärkungsblech
- 8 -: Außenseite zu 1
- 9 -: Innenverstärkungsblech
- 10 -: Innenseite zu 1
- 11 -: Wandstärke

- Ö -: Öffnung
- Ü -: Übergang

## Patentansprüche

1. Verfahren zur Herstellung eines Kraftfahrzeugbauteils (1), insbesondere einer Kraftfahrzeugsäule, **gekennzeichnet, durch** folgende Verfahrensschritte:
- Bereitstellen einer kaltverfestigten Platine aus einer 5000er Aluminiumlegierung,
- Partielles Erwärmen der Platine in einem ersten Bereich (5) auf eine Temperatur größer 350°C, wobei die Platine in einem zweiten Bereich (6) auf einer Temperatur zwischen 15°C und 30°C gehalten wird und das partielle Erwärmen in weniger als 20 s durchgeführt wird,
- Temperieren der gesamten Platine auf eine Temperatur zwischen 150 und 350°C in weniger als 20 s, wobei das Temperieren in einem separaten Temperierwerkzeug durchgeführt wird wobei sich an das Temperierwerkzeug ein kombiniertes Umform-und Abkühlwerkzeug oder ein Umformwerkzeug und von diesem separates Abkühlwerkzeug anschließt,
- Umformen der Platine zu dem Kraftfahrzeugbauteil (1) in weniger als 20 s und Abkühlen des Kraftfahrzeugbauteils (1),
- wobei mit dem Verfahren eine Dehngrenze in dem ersten Bereich (5) kleiner 250 MPa und größer 120 MPa und in dem zweiten Bereich (6) kleiner 450 MPa und größer 200 MPa eingestellt wird.

2. Verfahren nach Anspruch 1, **dadurch gekennzeichnet, dass** das Abkühlen in einem Umformwerkzeug durchgeführt wird, wobei während und/oder nach der Umformung die Abkühlung durchgeführt wird.

3. Verfahren nach Anspruch 1 oder 2, **dadurch gekennzeichnet, dass** das Umformen und Abkühlen in einem kombinierten Umform- und Kühlwerkzeug in weniger als 20 s durchgeführt wird.

4. Verfahren nach einem der Ansprüche 1 bis 3 **dadurch gekennzeichnet, dass** das Temperierwerkzeug eine Temperierstation ist.

5. Verfahren nach Anspruch 1 bis 4, **dadurch gekennzeichnet, dass** die Platine vor, während oder nach der Umformung beschnitten wird.

6. Verfahren nach einem der Ansprüche 1 bis 5, **dadurch gekennzeichnet, dass** eine Platine als Tailored Rolled Blank oder Tailored Welded Blank mit mindestens zwei voneinander verschiedenen Wandstärken (11) umgeformt wird.

7. Verfahren nach einem der Ansprüche 1 bis 6, **dadurch gekennzeichnet, dass** eine Kraftfahrzeugsäule aus Aluminium hergestellt wird, wobei die Kraftfahrzeugsäule mit einem Innenverstärkungsblech (9) und/oder eine Außenverstärkungsblech (7) gekoppelt wird.

8. Verfahren nach einem der Ansprüche 1 bis 7, **dadurch gekennzeichnet, dass** das Abkühlen mit einem ersten Kühlvorgang durchgeführt wird, wobei in dem ersten Kühlvorgang auf eine Temperatur zwischen 120 und 200°C abgekühlt wird und nach dem ersten Kühlvorgang ein zweiter Kühlvorgang durchgeführt wird, wobei der zweite Kühlvorgang in weniger als 20 s durchgeführt wird und auf Raumtemperatur abgekühlt wird.

9. Verfahren nach dem vorhergehenden Anspruch, **dadurch gekennzeichnet, dass** der zweite Kühlvorgang in einem separaten Kühlwerkzeug durchgeführt wird.

10. Verfahren nach einem der Ansprüche 1 bis 9, **dadurch gekennzeichnet, dass** die Platine oberflächenbehandelt wird.

11. Verfahren nach einem der Ansprüche 1 bis 10, **dadurch gekennzeichnet, dass** nach dem partiellen Erwärmen und vor dem Temperieren der gesamten Platine ein Zwischenschritt durchgeführt wird, wobei der Zwischenschritt vorsieht, dass die partiell erwärmte Platine vollständig abgekühlt wird.

## Claims

1. Method for manufacturing a motor vehicle part (1), in particular a motor vehicle pillar, **characterised by** following method steps:
- provision of a cold-worked blank made of an aluminium alloy in the 5000 series,
- partial heating of the blank in a first area (5) to a temperature greater than 350°C, wherein the blank in a second area (6) is kept at a temperature of between 15°C and 30°C and the partial heating is carried out in less than 20 s,
- tempering the entire blank to a temperature of between 150 and 350°C in less than 20 s, wherein the tempering is carried out in a separate tempering tool wherein a combined forming and cooling tool, or a forming and cooling tool separate therefrom, follows the tempering tool,
- forming of the blank to form the motor vehicle part (1) in less than 20 s and cooling of the motor vehicle part (1),
- wherein with the method a yield strength is set in the first area (5) at less than 250 MPa and more than 120 MPa and in the second area (6) at less than 450 MPa and more than 200 MPa.

2. Method according to claim 1, **characterised in that** the cooling is carried out in a forming tool, wherein the cooling is carried out during and/or after the forming.

3. Method according to claim 1 or 2, **characterised in that** the forming and cooling is carried out in a combined forming and cooling tool in less than 20 s.

4. Method according to any of claims 1 to 3, **characterised in that** the tempering tool is a temperature control station.

5. Method according to claim 1 to 4, **characterised in that** the blank is trimmed prior to, during or after the forming.

6. Method according to any of claims 1 to 5, **characterised in that** blank is formed as a Tailored Rolled Blank or Tailored Welded Blank having at least two wall thicknesses (11) different from one another.

7. Method according to any of claims 1 to 6, **characterised in that** a motor-vehicle column is manufactured from aluminium, wherein the motor-vehicle column is coupled with an internal reinforcement plate (9) and/or an external reinforcement plate (7).

8. Method according to any of claims 1 to 7, **characterised in that** the cooling is carried out with a first cooling procedure, wherein in the first cooling procedure cooling occurs to a temperature of between 120 and 200°C and after the first cooling procedure a second cooling procedure is carried out, wherein the second cooling procedure is carried out in less than 20 s and cooling occurs to room temperature.

9. Method according to the preceding claim, **characterised in that** the second cooling procedure is carried out in a separate cooling tool.

10. Method according to any of claims 1 to 9, **characterised in that** the blank is surface treated.

11. Method according to any of claims 1 to 10, **characterised in that** after the partial heating and prior to the tempering of the entire blank an interim step is carried out, wherein the interim step provides that a partially heated blank is completely cooled.

## Revendications

1. Procédé de fabrication d'une pièce de véhicule automobile (1), en particulier d'un pied de véhicule automobile, **caractérisé par** les étapes de procédé suivantes :
- fourniture d'un flan écroui en un alliage d'aluminium de la série 5000,
- chauffage partiel du flan dans une première zone (5) à une température supérieure à 350 °C, dans lequel le flan est maintenu dans une deuxième zone (6) à une température comprise entre 15 °C et 30 °C et le chauffage partiel est effectué en moins de 20 s,
- thermorégulation de l'ensemble du flan à une température comprise entre 150 et 350 °C en moins de 20 s, dans laquelle la thermorégulation est effectuée dans un outil de thermorégulation séparé, dans laquelle un outil combiné de mise en forme et de refroidissement ou un outil de mise en forme et un outil de refroidissement séparé de celui-ci fait suite à l'outil de thermorégulation,
- mise en forme du flan afin d'obtenir la pièce de véhicule automobile (1) en moins de 20 s et refroidissement de la pièce de véhicule automobile (1),
- dans lequel, avec le procédé, une limite de dilatation est réglée inférieure à 250 MPa et supérieure à 120 MPa dans la première zone (5) et inférieure à 450 MPa et supérieure à 200 MPa dans la deuxième zone (6).

2. Procédé selon la revendication 1, **caractérisé en ce que** le refroidissement est effectué dans un outil de mise en forme, dans lequel le refroidissement est effectué pendant et/ou après la mise en forme.

3. Procédé selon la revendication 1 ou 2, **caractérisé en ce que** la mise en forme et le refroidissement sont effectués dans un outil combiné de mise en forme et de refroidissement en moins de 20 s.

4. Procédé selon l'une quelconque des revendications 1 à 3, **caractérisé en ce que** l'outil de thermorégulation est un poste de thermorégulation.

5. Procédé selon l'une quelconque des revendications 1 à 4, **caractérisé en ce que** le flan est découpé avant, pendant ou après la mise en forme.

6. Procédé selon l'une quelconque des revendications 1 à 5, **caractérisé en ce qu'**un flan est mis en forme comme flan laminé sur mesure (Tailored Rolled Blank) ou flan soudé sur mesure (Tailored Welded Blank) avec au moins deux épaisseurs (11) différentes l'une de l'autre.

7. Procédé selon l'une quelconque des revendications 1 à 6, **caractérisé en ce qu'**un pied de véhicule automobile en aluminium est fabriqué, dans lequel le pied de véhicule automobile est couplé à une tôle de renfort intérieure (9) et/ou à une tôle de renfort extérieure (7).

8. Procédé selon l'une quelconque des revendications 1 à 7, **caractérisé en ce que** le refroidissement est effectué avec une première opération de refroidissement, dans laquelle on refroidit à une température comprise entre 120 et 200 °C dans la première opération de refroidissement et, après la première opération de refroidissement, une deuxième opération de refroidissement est effectuée, dans laquelle la deuxième opération de refroidissement est effectuée en moins de 20 s et on refroidit à température ambiante.

9. Procédé selon la revendication précédente, **caractérisé en ce que** la deuxième opération de refroidissement est effectuée dans un outil de refroidissement séparé.

10. Procédé selon l'une quelconque des revendications 1 à 9, **caractérisé en ce que** le flan est soumis à un traitement de surface.

11. Procédé selon l'une quelconque des revendications 1 à 10, **caractérisé en ce que**, après le chauffage partiel et avant la thermorégulation de l'ensemble du flan, une étape intermédiaire est effectuée, dans lequel l'étape intermédiaire prévoit que le flan partiellement chauffé soit complètement refroidi.
